# EUROPÄISCHE PATENTSCHRIFT

(11) **EP 1 950 074 B1**
(45) Veröffentlichungstag und Bekanntmachung des Hinweises auf die Patenterteilung: **08.07.2009**
(21) Anmeldenummer: 08001263.6
(22) Anmeldetag: 24.01.2008
(51) Int. Cl.: B60K 11/08, F01P 11/12

(54) **Selbstfahrende landwirtschaftliche Maschine**
Self-propelled agricultural machine
Machine agricole automobile

(30) Priorität: 26.01.2007 DE 102007004940
(43) Veröffentlichungstag der Anmeldung: 30.07.2008
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Beulting, Hubert, Dipl.-Ing., 48477 Hörstel (DE); Roling, Alfons, 49811 Lingen (DE)

(56) Entgegenhaltungen:
- DE-A1- 2 334 697
- DE-A1- 19 820 294
- FR-A- 2 356 533
- JP-A- 7 259 556
- JP-A- 61 009 380

## Beschreibung

Die Erfindung bezieht sich auf eine selbstfahrende landwirtschaftliche Maschine mit einem Verbrennungsmotor und zumindest einer Kühleinrichtung für den Verbrennungsmotor der zur Grobfilterung der angesaugten Kühlluft ein Grobfilter, vorzugsweise als Siebfläche ausgebildet, vorgeordnet ist, wobei durch die Möglichkeit der Umkehr des Kühlluftstromes insbesondere der Grobfilter von anhaftenden Verschmutzungen gereinigt werden kann.

Derartige Kühleinrichtungen an landwirtschaftlichen Maschinen sind in vielfältiger Weise insbesondere für Mähdrescher, Feldhäcksler, Traktoren oder selbstfahrende Mähaufbereiter bekannt. Diese Maschinen weisen eine Kühleinrichtung zur Kühlung des Kühlwassers des Verbrennungsmotors auf, wobei dem Wasserkühler in den meisten Fällen noch weitere Kühler für beispielsweise Hydrauliköl zugeordnet sind. Durch die Kühlelemente wird mittels einer als Ventilator ausgebildeten Lüftereinrichtung ein Kühlluftstrom gesaugt der dann vorteilhaft den Motorraum durchspült um dort einen Hitzestau zu vermeiden und dann ins Freie geleitet wird.

Insbesondere landwirtschaftliche Maschinen im Ernteeinsatz sind besonders rauen Umgebungsbedingungen ausgesetzt, wobei sich nicht vermeiden lässt, dass mit dem Kühlluftstrom Staub und Pflanzenteile angesaugt werden, die sich vor den Kühlelementen oder vor einem, in den meisten Fällen vorteilhaft vor den Kühlelementen angeordneten Grobfilter festsetzen und so zunehmend die Kühlung beeinträchtigen. Bevor die Beeinträchtigung zu groß wird, wird der Kühlluftstrom umgekehrt, so dass die Fremdkörper aus den Kühlelementen und von dem Grobfilter abfallen bzw. herausgeblasen werden.

Eine landwirtschaftliche Maschine mit einer Ausführungsform einer nach diesem Prinzip arbeitenden Kühleinrichtung ist aus der Patentschrift DE 29 48 071 C2 bekannt. Bei der hier beschriebenen Ausführung der Kühleinrichtung werden zwei Kühlelemente durch die von zwei Lüfterventilatoren erzeugten Luftströme durchströmt. Durch die geschickte gegenüberliegende Anordnung sowohl der Kühlelemente, als auch der Ventilatoren werden die Luftströme durch das Verschwenken nur einer Luftklappe derart wechselseitig umgelenkt, dass die Kühlelemente abwechselnd von beiden Seiten durchströmt werden, wodurch diese und die vorgelagerten Siebflächen gereinigt werden. Der Motorraum der beschriebenen Maschine wird zwar ständig von einem Luftstrom durchspült, wodurch ein Hitzestau vermieden wird, da sich aber der Luftaustritt aus dem Motorraum an der Oberseite der Maschinenverkleidung befindet und dieser Luftstrom immer gleichgerichtet ist, ist die Gefahr von Schmutzablagerungen durch einen Zykloneffekt im Motorraum sehr groß. Schmutzablagerungen in Verbindung mit heißen Motoren- und Auspuffteilen erhöhen die Brandgefahr der Maschine erheblich. Des weiteren nachteilig an der Maschine nach der DE 29 48 071 C2 ist die Tatsache, dass an der Hinterseite der Maschine eine Siebeinrichtung vorhanden ist, durch die einer der beiden Lüfter ständig Kühlluft ansaugt und diese Siebeinrichtung nicht gereinigt wird. Die Folge ist eine zunehmende Verschmutzung der Siebfläche und damit eine nachlassende Kühlleistung der Kühleinrichtung, womit die vorgestellte Lösung völlig unzureichend und zu aufwändig ist.

Aus JP 072 59 556 ist eine landwirtschaftliche Maschine gemäß dem einleitenden Teil des Anspruchs 1 bekannt.

Deshalb liegt der Erfindung die Aufgabe zugrunde, eine selbstfahrende landwirtschaftliche Maschine mit einer Kühleinrichtung bereitzustellen, die mit möglichst einfachen Mitteln eine immer ausreichende Kühlleistung und eine Reinhaltung und Durchlüftung des Motorraumes gewährleistet.

Diese Aufgabe wird gemäß der Erfindung durch die Merkmale des Hauptanspruches gelöst.

Es wird eine Maschine mit einer Kühleinrichtung vorgeschlagen, bei der im Normalbetrieb, womit die Kühlbetriebsart der Kühleinrichtung gemeint ist, ein Ventilator einen Kühlluftstrom erzeugt, der von außen durch ein Grobfilter und durch zumindest ein nachgeordnetes Kühlelement den Motorraum durchströmt. Durch den vorteilhaft nach unten offenen Motorraum entweicht die Kühlluft wieder in die Umgebung, wobei durch eine möglichst groß gehaltene Öffnung die Strömungsgeschwindigkeit verringert wird und so Staub- und Schmutzaufwirbelungen vermieden werden.

Die zuvor beschriebenen Nachteile beim Stand der Technik, insbesondere die Schmutzablagerungen im Motorraum werden bei der erfindungsgemäßen Maschine geschickt vermieden. Der genannte Zykloneffekt mit den gefährlichen Schmutzablagerungen wird durch den ausschließlich nach unten gerichteten Luftaustritt vermieden und des weiteren wird der Motorraum beim Umkehren der Kühlluftströmung in der Reinigungsbetriebsart ebenfalls in umgekehrter Richtung durchströmt.

Dieser weitere Vorteil der erfindungsgemäßen Maschine verursacht derartige wechselweise Luftströmungen im Motorraum, dass selbst geringste Verschmutzungen gelöst und abgeführt bzw. vermieden werden.

Ein nur nach unten offener Motorraum hat auch im Stillstand der Maschine den Vorteil geringerer Schmutzablagerungen innerhalb des Motorraum. Besonders bei Erntemaschinen die nur saisonal eingesetzt werden und dazwischen eine lange Standzeit haben kann der Staub- und Schmutzeintrag in den Motorraum durch obere Öffnungen erheblich sein.

In der Reinigungsbetriebsart der Kühleinrichtung der Maschine nach der Erfindung wird die Kühl- und Reinigungsluft durch die untere Motorraumöffnung angesaugt und durch das Kühlelement und das Grobfilter abgeführt, wobei diese dadurch von anhaftenden Schmutz- und Pflanzenteilen gereinigt werden. Das Grobfilter ist vorzugsweise eine Siebfläche aus Metallgewebe oder gestanztem Blech die in die Ansaugöffnungen der Maschinenverkleidung eingepasst ist. Diverse andere Ausführungen aus beispielsweise Kunststoff oder Tuchgewebe, einteilig oder mehrteilig in verschiedensten Formen, sind aber ebenso bekannt und erfüllen alle die Aufgabe, grobe Schmutz- und Pflanzenteile von den Kühlelementen fernzuhalten, weil sich die Verunreinigungen an und in den Kühlelementen wesentlich stärker festsetzen als an den Grobfiltern und somit eine Reinigung erschweren würden.

Wenn in der Reinigungsbetriebsart die gesamte Kühl- und Reinigungsluft durch die untere Motorraumöffnung angesaugt wird, besteht auch bei großzügiger Auslegung der Öffnung und damit geringen Strömungsgeschwindigkeiten die Gefahr, das mit der Ansaugluft auch Schmutz- und Pflanzenteile angesaugt werden, die dann von innen an oder in den Kühlelementen eventuell derart stark haften, dass sie auch nach Umkehrung des Kühlluftstromes in die Kühlbetriebsart von diesem nicht gelöst werden können. Hier kommen nun die besonders vorteilhaften Merkmale der Erfindung zum tragen, die den zuvor beschriebenen eventuellen Nachteil einer unteren Motorraumöffnung gänzlich beheben.

Die Erfindung schlägt vor, eine weitere Öffnung in der Motorraumverkleidung vorzusehen, die aber nur in der Reinigungsbetriebsart als eine Art Bypass geöffnet ist, um die Saugwirkung durch die untere Motorraumöffnung zumindest derart zu verringern, dass störende Schmutz- und Pflanzenteile nicht mehr angesaugt werden.

Vorteilhaft sind eine oder mehrere derartige Bypassöffnungen in einem Bereich sauberer Umgebungsluft, also im oberen Bereich, insbesondere an der Oberseite des Motorraums anzuordnen. Im Normalbetrieb ist die zusätzliche Motorraumöffnung geschlossen , so das der Kühlluftstrom wie bereits zuvor beschrieben vorteilhaft nach unten aus dem Motorraum entweicht.

Zum verschließen der zusätzlichen Lufteintrittsöffnung sind verschiedenste Ausführungsformen denkbar. Als besonders wirtschaftlich und zweckmäßig wird eine Ausführung mit einer sich selbsttätig durch die Druckverhältnisse im Motorraum öffnende und schließende Klappe vorgeschlagen. Das Öffnen der Klappe kann über einen Unterdruck erfolgen, der sich im Motorraum in der Reinigungsbetriebsart der Kühleinrichtung durch die Sogwirkung des umgesteuerten Ventilators einstellt. Dafür ist die Luftklappe um einen Drehpunkt verschwenkbar ausgebildet und wird im Normalbetrieb entweder durch einen Kraftspeicher in Form einer Drehfeder, eines Gasdruckelementes oder sonstigen dem Fachmann bekannten Ausführungen verschlossen gehalten, oder aber die Luftklappe ist durch ihre Form und ihre Massenverhältnisse derart gestaltet, dass sie sich druckabhängig und/oder Luftströmungsabhängig öffnet und schließt.

Weitere Ausführungen eines Bypassverschlusses in der Art einer nur einseitig durchlassenden, ebenfalls bei Unterdruck öffnenden Membrane aus elastischen Material ist ebenfalls als besonders einfache kostengünstige Lösung denkbar.

In einer aufwändigeren Ausführungsform kann die Lufteintrittsöffnung auch mit einem über eine Steuerung gesteuerten Verschluss versehen sein, der aufgrund von ermittelten Druck- und/oder Strömungswerten den zusätzlichen Lufteintritt regelt und/oder auch zeitversetzt zur Verhinderung von Spitzenwerten steuert.

In einer weiteren Ausführungsform einer erfindungsgemäßen landwirtschaftlichen Maschine ist auch denkbar die Luftströmung im Motorraum zwischen der Kühlbetriebsart und er Reinigungsbetriebsart durch das zumindest teilweise, oder aber auch komplette Verschließen der unteren Motorraumöffnung bei gleichzeitigem Öffnen zumindest einer Lufteintrittsöffnung im oberen Motorraumbereich gänzlich umzulenken. So sind im Rahmen der Erfindung diverse Ausführungsformen denkbar die alle das Ziel haben eine selbstfahrende landwirtschaftliche Maschine mit einer Kühleinrichtung bereitzustellen, die insbesondere eine Reinhaltung und Durchlüftung des Motorraumes gewährleistet.

Die Erfindung soll nun anhand eines Ausführungsbeispiel näher erläutert werden.

In der Zeichnung zeigt
- **Fig. 1**: eine perspektivische Gesamtansicht einer erfindungsgemäßen landwirtschaftlichen Maschine,
- **Fig. 2**: eine gebrochene Teilansicht auf die Kühleinrichtung der Maschine nach Fig. 1, wobei zur besseren Verdeutlichung Maschinen- und Verkleidungsteile entfernt sind,
- **Fig. 3**: eine Ansicht nach Fig. 2 in einer weiteren Betriebsart.

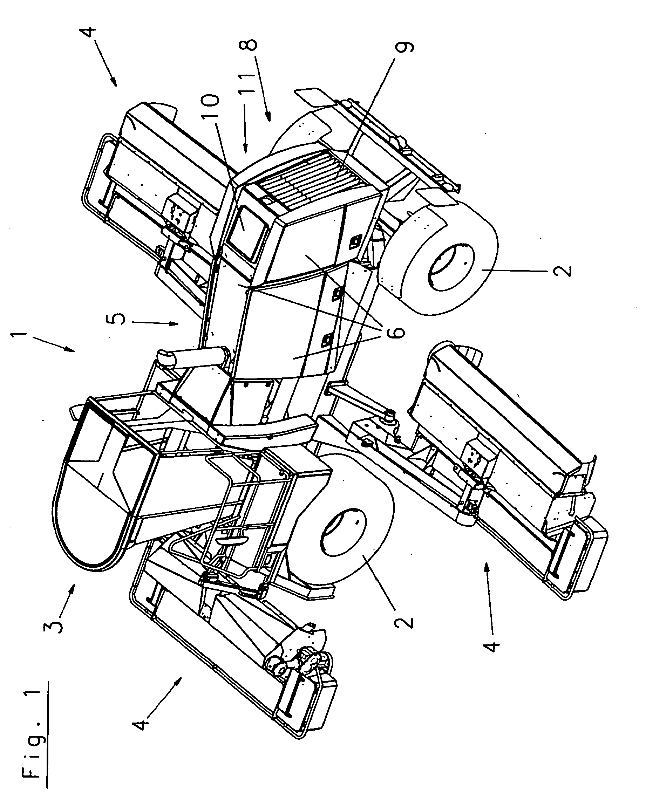

Die in Fig. 1 dargestellte landwirtschaftliche Maschine 1 ist eine als selbstfahrender Mähaufbereiter ausgebildete Erntemaschine, insbesondere zum Mähen und Aufbereiten von Gras. Sie umfasst Räder 2, eine Fahrerkabine 3, Mäheinheiten 4, einen Verbrennungsmotor 5, der in einem durch eine Motorraumverkleidung 6 gebildeten Motorraum 7 angeordnet ist und eine Kühleinrichtung 8, die unter anderem die zur Kühlung des Verbrennungsmotors 5 notwendige Kühlluft durch einen Grobfilter 9 am Maschinenheck ansaugt. Des weiteren ist durch die perspektivische Darstellung der Figur 1 die mit einer Luftklappe 10 verschlossene Lufteintrittsöffnung 11 in der Oberseite der Motorraumverkleidung 6 zu erkennen.

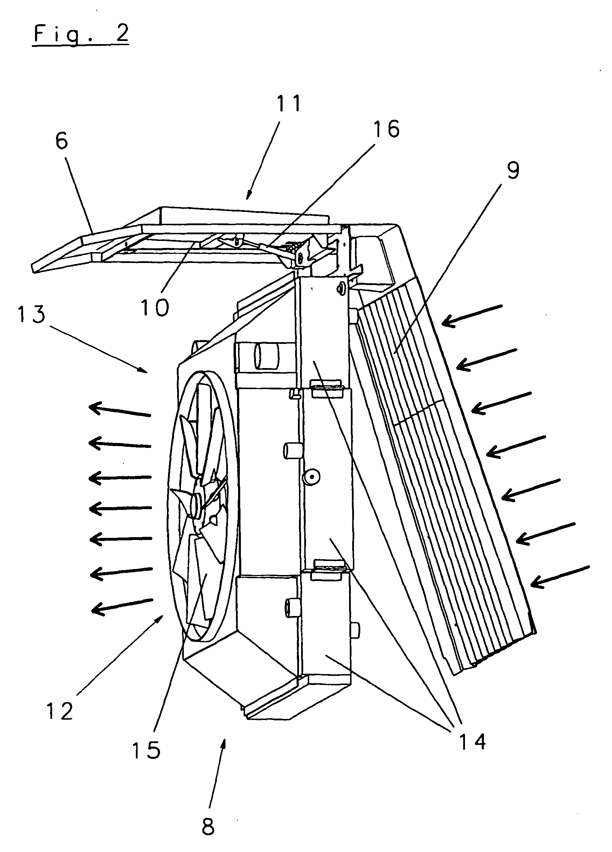

Fig. 2 zeigt aus einer weiteren Perspektive einen Ausschnitt des hinteren Bereiches des Motorraums 7 mit der dort angeordneten Kühleinrichtung 8. Zur besseren Erkennbarkeit der Erfindungsrelevanten Teile sind angrenzende und verdeckende Maschinen- und Verkleidungsteile nicht dargestellt. Fig. 2 stellt den Normalbetrieb der Kühleinrichtung 8 dar, wobei die Kühlluftströmung mit Pfeilen angedeutet ist. Im Normalbetrieb arbeitet die Kühleinrichtung 8 in der Kühlbetriebsart, welche ausschließlich der Kühlung des Verbrennungsmotors 5 und eventuell weiterer nicht näher benannter Nebenaggregate und des Kabineninnenraums dient. Dies geschieht dadurch, dass der Ventilator 12 der Lüftereinrichtung 13 durch Drehung mit entsprechender Drehzahl derart eine Luftströmung erzeugt, dass Außenluft durch das in die Motorraumverkleidung 6 integrierte Grobfilter 9 angesaugt wird, im weiteren die Kühlelemente 14 der Kühleinrichtung 8 durchströmt und dann in den Motorraum 7 gedrückt wird, aus dem die Kühlluft durch die nach unten offene Bauweise vorteilhaft dort entweichen kann. So wird zum einen durch eine gute Luftdurchspülung des Motorraums 7 ein Hitzestau und zum anderen durch einen dabei entstehenden Überdruck im Motorraum, dass Eindringen von Verschmutzungen wirkungsvoll vermieden.

Insbesondere bei Erntemaschinen wird durch den Erntevorgang und durch eventuelle Weiterbearbeitung des Ernteguts eine starke Luftverunreinigung durch aufgewirbelten Schmutz und durch Erntegutteile wie Gras Stroh oder ähnlichem verursacht. Mit dem Luftstrom der angesaugten Kühlluft werden diese Verunreinigungen ebenfalls mit angesaugt und setzen sich auf der äußeren Oberfläche des Grobfilters 9 fest. Ab einem gewissen Verschmutzungsgrad des Grobfilters 9 steht nicht mehr genügend Luftansaugfläche zur Sicherstellung der Kühlleistung für die Maschine zur Verfügung. Damit es erst gar nicht so weit kommt und keine Arbeitsunterbrechungen für die manuelle Reinigung der Siebflächen anfallen, sind verschiedenste Lösungen bekannt, die Verunreinigungen des Grobfilters 9 durch Umkehrung des Kühlluftstromes von diesem zu entfernen. Die Kühleinrichtung 8 der erfindungsgemäßen landwirtschaftlichen Maschine 1 des Ausführungsbeispiels umfasst zu diesem Zweck einen Ventilator 12, dessen Flügel 15 derart um ihre Mittelachse drehbar sind, dass sich bei gleich bleibender Drehrichtung die Luftströmungsrichtung umkehrt. Derartige Umkehrlüfter sind allgemein bekannt und bieten eine einfache und platzsparende Möglichkeit einen Reinigungsluftstrom zum Ausblasen der Kühlelemente 14 und der Ansaugfilterfläche 9 zu erzeugen. Das Ansteuersignal zur Umkehrung des Luftstromes von der Kühlbetriebsart in die Reinigungsbetriebsart und umgekehrt kann dabei auf vielfältige Weise generiert werden. Eine zeitabhängige, eine von Sensoren ermittelte vom Verschmutzungsgrad abhängige, eine gleichzeitig mit anderen Maschinenfunktionen oder aber auch eine manuelle Ansteuerung ist denkbar.

In der Kühlbetriebsart ist ein möglichst ungehindertes entweichen der Kühlluft aus dem Motorraum 7 nach unten zum Erdboden hin gerichtet, so wie es die Maschine des Ausführungsbeispiels ermöglicht, sehr vorteilhaft zur Vermeidung von Schmutzablagerungen im Motorraum 7. Nachteilig an die Ausführung kann sich jedoch auswirken, dass in der Reinigungsbetriebsart der Kühleinrichtung 8 die Luft damit aus einem Bereich angesaugt wird, der eventuell extrem mit Verunreinigungen belastet ist und diese Luft im weiteren Strömungsverlauf ungefiltert auf die Kühlelemente 14 trifft. Um diesen Nachteil zu vermeiden, weist die in Fig. 1 dargestellte Maschine 1 als besonderes Merkmal der Erfindung eine zusätzliche Lufteintrittsöffnung 11 in der Oberseite der Motorraumverkleidung 6 auf, die in der Kühlbetriebsart mit einer Luftklappe 10 verschlossen ist und in der Reinigungsbetriebsart als Bypass für die Luftansaugung selbsttätig öffnet.

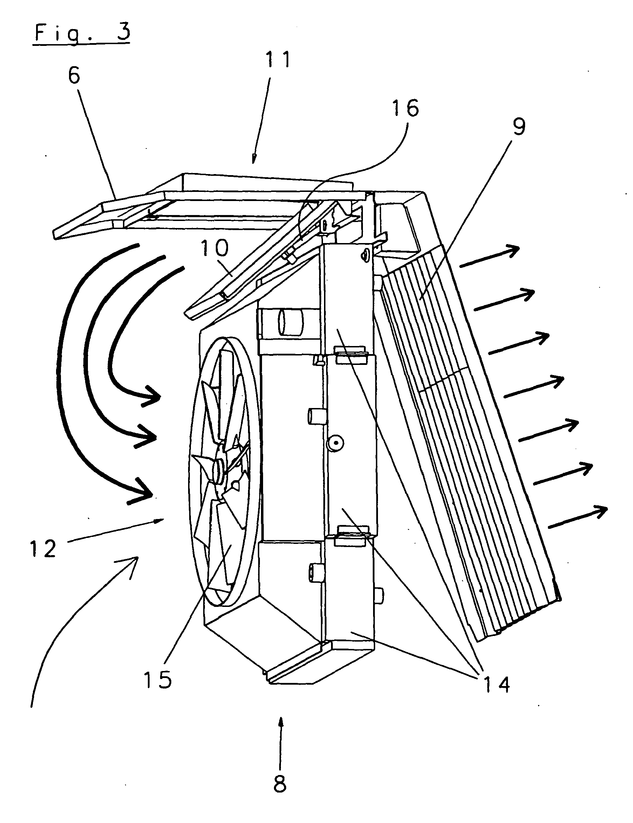

Fig. 3 stellt die Kühleinrichtung 8 in der Reinigungsbetriebsart mit der entsprechenden Stellung der Luftklappe 10 dar, wobei die Pfeile die Luftströmungen andeuten. Während der Umsteuerung der Luftströmung von der Kühlrichtung in die umgekehrte Reinigungsrichtung, ändern sich auch gleichzeitig die Druckverhältnisse im Motorraum 7. Der im Normalbetrieb herrschende Überdruck lässt nach und es entsteht durch die Sogwirkung der Lüftereinrichtung ein Unterdruck. Dieser Unterdruck bewirkt das Öffnen der Lufteintrittsöffnung 11 in der oberen Motorraumverkleidung 6 durch herunterschwenken der einseitig gelagerten Luftklappe 10. Bei Druckausgleich, was bei Maschinenstillstand der Fall ist, und bei Überdruck im Motorraum wird die Luftklappe 10 durch einen Kraftspeicher 16 in Form einer Gasdruckfeder in die Schließstellung gebracht und dort gehalten. Diverse andere Ausführungsformen von Kraftspeichern für die selbsttätige Luftklappenbetätigung, wie beispielsweise Drehfedern oder elastische Federelemente sind hier ebenso denkbar wie eine aktiv angesteuerte Betätigung durch Stellantriebe, wobei die hier beschriebene und gezeigte druckabhängig selbsttätig gesteuerte Luftklappe 10 eine sehr kostengünstige und betriebssichere Lösung darstellt. Alternativ zur dargestellten Luftkappe 10 sind auch einseitig luftdurchlässige Membranen, Lamellenverschlüsse oder sonstige aus der Lüftungstechnik bekannten Verschlüsse für Lufteintrittsöffnungen denkbar. Entscheidend für die vorteilhafte Wirkung der zusätzlichen Lufteintrittsöffnung 11 ist, dass durch das Öffnen der Öffnung 11 während der Reinigungsbetriebsart die Saugwirkung an der unteren Motorraumöffnung derart reduziert wird, dass Schmutz- und Erntegutteile dort nicht in den Reinigungsluftstrom gelangen. Diese vorteilhafte Luftströmung zur Reinigung der Kühleinrichtung 8 und des vorgelagerten Grobfilters 9 wird in Fig. 3 durch die Pfeile verdeutlicht.

## Patentansprüche

1. Selbstfahrende landwirtschaftliche Maschine (1) mit einem Verbrennungsmotor (5) und einer Kühleinrichtung (8), welche zumindest ein Kühlelement (14) und eine Lüftereinrichtung (13) zur Erzeugung eines Kühlluftstromes aufweist, wobei der Kühlluftstrom in einer ersten Kühlbetriebsart durch das Kühlelement (14) und weiter stromab durch den Motorraum (7) strömt und in einer weiteren Reinigungsbetriebsart zur Reinigung des Kühlelements (14) und einem der Kühleinrichtung (8) vorgeordneten Grobfilter (9) in seiner Richtung umkehrbar ist, **dadurch gekennzeichnet, dass** gleichzeitig mit der Umkehrung des Kühlluftstromes in die Reinigungsbetriebsart zumindest eine Lufteintrittsöffnung (11) in der Motorraumverkleidung (6) freigegeben wird, welche in der Kühlbetriebsart der Kühleinrichtung (8) geschlossen ist.

2. Selbstfahrende landwirtschaftliche Maschine (1) nach Anspruch 1, **dadurch gekennzeichnet, dass** die Lufteintrittsöffnung (11) druckabhängig freigegeben wird.

3. Selbstfahrende landwirtschaftliche Maschine (1) nach Anspruch 2, **dadurch gekennzeichnet, dass** die Freigabe der Lufteintrittsöffnung (11) durch einen Unterdruck im Motorraum (7) selbständig erfolgt.

4. Selbstfahrende landwirtschaftliche Maschine (1) nach einem der Ansprüche 1 bis 3, **dadurch gekennzeichnet, dass** die Lufteintrittsöffnung (11) beim Wechsel von der Reinigungsbetriebsart der Kühleinrichtung (8) in die Kühlbetriebsart selbständig schließt.

5. Selbstfahrende landwirtschaftliche Maschine (1) nach einem oder mehreren der vorstehenden Ansprüche, **dadurch gekennzeichnet, dass** die Richtungsumkehr des Kühlluftstromes durch Verstellung der Flügel (15) der als Ventilator (12) ausgebildeten Lüftereinrichtung (8) erfolgt.

6. Selbstfahrende landwirtschaftliche Maschine (1) nach einem der Ansprüche 1 bis 4, **dadurch gekennzeichnet, dass** die Richtungsumkehr des Kühlluftstromes durch Drehrichtungsumkehr der als Ventilator (12) ausgebildeten Lüftereinrichtung (8) erfolgt.

7. Selbstfahrende landwirtschaftliche Maschine (1) nach einem oder mehreren der vorstehenden Ansprüche, **dadurch gekennzeichnet, dass** die Lufteintrittsöffnung (11) im oberen Bereich der Motorraumverkleidung, vorzugsweise an der Oberseite der Motorraumverkleidung (6) angeordnet ist.

8. Selbstfahrende landwirtschaftliche Maschine (1) nach einem oder mehreren der vorstehenden Ansprüche, **dadurch gekennzeichnet, dass** die Lufteintrittsöffnung (11) in der Kühlbetriebsart durch eine um einen Drehpunkt verschwenkbare Luftklappe (10) verschlossen ist.

9. Selbstfahrende landwirtschaftliche Maschine (1) nach Anspruch 8, **dadurch gekennzeichnet, dass** die Luftklappe (11) in der Kühlbetriebsart durch einen Kraftspeicher (16) in ihrer Schließstellung gehalten wird.

10. Selbstfahrende landwirtschaftliche Maschine (1) nach einem oder mehreren der Ansprüche 1 bis 8, **dadurch gekennzeichnet, dass** die Lufteintrittsöffnung (11) in der Kühlbetriebsart durch eine elastische Membrane verschlossen ist.

11. Selbstfahrende landwirtschaftliche Maschine (1) nach einem oder mehreren der vorstehenden Ansprüche, **dadurch gekennzeichnet, dass** der Kühlluftstrom in der Kühlbetriebsart aus einer unteren Motorraumöffnung nach unten, zumindest annähernd gegen den Erdboden gerichtet, austritt.

12. Selbstfahrende landwirtschaftliche Maschine (1) nach einem oder mehreren der vorstehenden Ansprüche, **dadurch gekennzeichnet, dass** der wirksame Querschnitt der Lufteintrittsöffnung (11) im oberen Bereich der Motorraumverkleidung (6) mindestens 1/3 des Querschnitts der unteren Motorraumöffnung beträgt.

13. Selbstfahrende landwirtschaftliche Maschine (1) nach einem oder mehreren der vorstehenden Ansprüche, **dadurch gekennzeichnet, dass** die untere Motorraumöffnung durch einen Unterdruck im Motorraum (7) zumindest teilweise verschließbar ist.

## Claims

1. Self-propelled agricultural machine (1) having an internal combustion engine (5), and a cooling arrangement (8) which has at least one cooling element (14) and an aerator arrangement (13) to produce a flow of cooling air, the flow of cooling air flowing through the cooling element (14) and, further downstream, through the engine compartment (7) in a first, cooling, mode, and being able to have its direction reversed in a further, cleaning, mode to enable the cooling element (14) and a coarse filter (9) positioned in front of the cooling arrangement (8) to be cleaned, **characterised in that**, simultaneously with the reversal of the flow of cooling air on entry into the cleaning mode, at least one air inlet opening (11) in the engine compartment enclosure (6) which is closed when the cooling arrangement (8) is in the cooling mode is opened.

2. Self-propelled agricultural machine (1) according to claim 1, **characterised in that** the air inlet opening (11) is opened as a function of pressure.

3. Self-propelled agricultural machine (1) according to claim 2, **characterised in that** the opening of the air inlet opening (11) takes place automatically as a result of a pressure below atmospheric in the engine compartment (7).

4. Self-propelled agricultural machine (1) according to one of claims 1 to 3, **characterised in that** the air inlet opening (11) closes automatically at the changeover from the cleaning mode of the cooling arrangement (8) to the cooling mode.

5. Self-propelled agricultural machine (1) according to one or more of the foregoing claims, **characterised in that** the reversal of the direction of the flow of cooling air takes place as a result of adjustment of the blades (15) of the aerator arrangement (8), which takes the form of a fan (12).

6. Self-propelled agricultural machine (1) according to one of claims 1 to 4, **characterised in that** the reversal of the direction of the flow of cooling air takes place as a result of reversal of the direction of rotation of the aerator arrangement (8), which takes the form of a fan (12).

7. Self-propelled agricultural machine (1) according to one or more of the foregoing claims, **characterised in that** the air inlet opening (11) is arranged in the upper region of the enclosure of the engine compartment, and preferably at the top of the enclosure (6) of the engine compartment.

8. Self-propelled agricultural machine (1) according to one or more of the foregoing claims, **characterised in that** the air inlet opening (11) is closed off in the cooling mode by an air flap (10) which is pivotable about a point of rotation.

9. Self-propelled agricultural machine (1) according to claim 8, **characterised in that** the air flap (11) is held in its closed position in the cooling mode by a force-storing means (16).

10. Self-propelled agricultural machine (1) according to one or more of claims 1 to 8, **characterised in that** the air inlet opening (11) is closed off in the cooling mode by an elastic membrane.

11. Self-propelled agricultural machine (1) according to one or more of the foregoing claims, **characterised in that** in the cooling mode the flow of cooling air emerges downwards from an opening at the bottom of the engine compartment, at least approximately in a direction directed towards the ground.

12. Self-propelled agricultural machine (1) according to one or more of the foregoing claims, **characterised in that** the effective cross-section of the air inlet opening (11) in the upper region of the enclosure (6) of the engine compartment is at least 1/3 of the cross-section of the opening at the bottom of the engine compartment.

13. Self-propelled agricultural machine (1) according to one or more of the foregoing claims, **characterised in that** the opening at the bottom of the engine compartment can be at least partly closed off as a result of a pressure below atmospheric in the engine compartment (7).

## Revendications

1. Machine agricole automotrice (1) équipée d'un moteur à combustion interne (5) et d'une installation de refroidissement (8), celle-ci ayant au moins un élément de refroidissement (14) et une installation de ventilation (13) pour générer une veine d'air de refroidissement,
dans un premier mode de refroidissement, la veine d'air de refroidissement traverse l'élément de refroidissement (14) et passe en aval par l'enceinte (7) du moteur et dans un autre mode de fonctionnement de nettoyage la veine d'air est inversée pour nettoyer l'élément de refroidissement (14) et un filtre grossier (9) en amont de l'installation de refroidissement (8),
**caractérisée en ce qu'**
en même temps que l'on inverse la veine d'air de refroidissement pour le mode de fonctionnement de nettoyage, au moins un orifice d'entrée d'air (11) est libéré dans l'habillage (6) de l'enceinte du moteur, cette ouverture d'entrée d'air étant fermée lorsque l'installation de refroidissement (8) fonctionne en mode de refroidissement.

2. Machine agricole automotrice (1) selon la revendication 1,
**caractérisée en ce que**
l'ouverture d'entrée d'air (11) est libérée en fonction de la pression.

3. Machine agricole automotrice (1) selon la revendication 2,
**caractérisée en ce que**
la libération de l'ouverture d'entrée d'air (11) se fait de manière automatique par la dépression dans l'enceinte (7) du moteur.

4. Machine agricole automotrice (1) selon l'une des revendications 1 à 3,
**caractérisée en ce que**
l'ouverture d'entrée d'air (11) se ferme automatiquement lorsqu'on commute du mode de fonctionnement de nettoyage de l'installation de refroidissement (8) dans le mode de fonctionnement de refroidissement.

5. Machine agricole automotrice (1) selon une ou plusieurs des revendications précédentes,
**caractérisée en ce que**
l'inversion de sens de passage de la veine d'air de refroidissement se fait par le réglage des pales (15) de l'installation de ventilation (8) réalisée par un ventilateur (12).

6. Machine agricole automotrice (1) selon l'une des revendications 1 à 4,
**caractérisée en ce que**
l'inversion de sens de passage de la veine d'air de refroidissement se fait par inversion du sens de rotation de l'installation de ventilation (8) réalisée par un ventilateur (12).

7. Machine agricole automotrice (1) selon une ou plusieurs des revendications précédentes,
**caractérisée en ce que**
l'ouverture d'entrée d'air (11) est située dans la zone supérieure de l'habillage de l'enceinte du moteur, de préférence sur le côté supérieur de l'habillage (6) du moteur.

8. Machine agricole automotrice (1) selon une ou plusieurs des revendications précédentes,
**caractérisée en ce que**
dans le mode de fonctionnement de refroidissement, l'ouverture d'entrée d'air (11) est fermée par un volet (10) pivotant autour d'un point de rotation.

9. Machine agricole automotrice (1) selon la revendication 8,
**caractérisée en ce qu'**
en mode de fonctionnement de refroidissement, le volet d'air (11) est tenu dans sa position de fermeture par un accumulateur de force (16).

10. Machine agricole automotrice (1) selon un ou plusieurs des revendications 1 à 8,
**caractérisée en ce qu'**
en mode de fonctionnement de refroidissement, l'ouverture d'entrée d'air (11) est fermée par une membrane élastique.

11. Machine agricole automotrice (1) selon une ou plusieurs des revendications précédentes,
**caractérisée en ce qu'**
en mode de fonctionnement de refroidissement, la veine d'air de refroidissement sort d'une ouverture inférieure de l'enceinte du moteur, en descendant, en étant dirigée au moins sensiblement vers le sol.

12. Machine agricole automotrice (1) selon une ou plusieurs des revendications précédentes,
**caractérisée en ce que**
la section efficace de l'ouverture d'entrée d'air (11) dans la zone supérieure de l'habillage (6) de l'enceinte du moteur représente au moins un tiers de la section de l'ouverture inférieure de l'enceinte du moteur.

13. Machine agricole automotrice (1) selon une ou plusieurs des revendications précédentes,
**caractérisée en ce que**
l'ouverture inférieure de l'enceinte du moteur est fermée au moins partiellement par la dépression régnant dans l'enceinte (7) du moteur.
